(19) **Europäisches Patentamt**
**European Patent Office**
**Office européen des brevets**

(11) **EP 3 697 095 B1**

(12) **EUROPEAN PATENT SPECIFICATION**

(45) Date of publication and mention
of the grant of the patent:
**12.11.2025 Bulletin 2025/46**

(21) Application number: **18866688.7**

(22) Date of filing: **28.06.2018**

(51) International Patent Classification (IPC):
***H04N 21/2343*** *(2011.01)*

(52) Cooperative Patent Classification (CPC):
**H04N 19/124; H04N 19/14; H04N 19/176;**
**H04N 19/196; H04N 19/40;** H04N 19/146;
H04N 21/2343; H04N 21/4402

(86) International application number:
**PCT/CN2018/093318**

(87) International publication number:
**WO 2019/071984 (18.04.2019 Gazette 2019/16)**

(54) **VIDEO TRANSCODING METHOD, COMPUTER DEVICE AND STORAGE MEDIUM**

VIDEOTRANSCODIERUNGSVERFAHREN, COMPUTERVORRICHTUNG UND
SPEICHERMEDIUM

PROCÉDÉ DE TRANSCODAGE VIDÉO, DISPOSITIF INFORMATIQUE ET SUPPORT DE
STOCKAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **10.10.2017 CN 201710937011**

(43) Date of publication of application:
**19.08.2020 Bulletin 2020/34**

(73) Proprietor: **Tencent Technology (Shenzhen)**
**Company Limited**
**Shenzhen, Guangdong, 518057 (CN)**

(72) Inventors:
• **MAO, Xunan**
**Shenzhen**
**Guangdong 518057 (CN)**
• **HAN, Haixu**
**Shenzhen**
**Guangdong 518057 (CN)**
• **GAO, Xinwei**
**Shenzhen**
**Guangdong 518057 (CN)**

• **GU, Chenchen**
**Shenzhen**
**Guangdong 518057 (CN)**
• **HE, Jian**
**Shenzhen**
**Guangdong 518057 (CN)**
• **CHEN, Jingchang**
**Shenzhen**
**Guangdong 518057 (CN)**

(74) Representative: **Novagraaf International SA**
**Chemin de l'Echo 3**
**1213 Onex, Geneva (CH)**

(56) References cited:
WO-A2-2007/086590       CN-A- 1 653 822
CN-A- 101 594 525       CN-A- 104 202 660
US-A1- 2008 031 337      US-B1- 6 441 754

• YANG JINGYU ET AL: "A rate control algorithm
for MPEG-2 to H.264 real-time transcoding", vol.
5960, 1 July 2005 (2005-07-01), Orlando, Florida,
pages 1995 - 2003, XP055806987, ISSN:
0277-786X, ISBN: 978-1-5106-4059-7, Retrieved
from the Internet <URL:http://dx.doi.org/10.1117/
12.633372> DOI: 10.1117/12.633372

(Cont. next page)

- SEO K ET AL: "DYNAMIC BIT-RATE REDUCTION BASED ON REQUANTIZATION AND FRAME-SKIPPING FOR MPEG-1 TO MPEG-4 TRANSCODER", IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E87-A, no. 4, 1 April 2004 (2004-04-01), pages 903 - 911, XP001193272, ISSN: 0916-8508
- NAKAJIMA Y ET AL: "Rate conversion of MPEG coded video by re-quantization process", PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US, vol. 3, 23 October 1995 (1995-10-23), pages 408 - 411, XP010197208, ISBN: 978-0-7803-3122-8, DOI: 10.1109/ICIP.1995.537658

## Description

This application claims priority to Chinese Patent Application No. 2017109370116, entitled "VIDEO TRANSCODING METHOD, APPARATUS, COMPUTER DEVICE, AND STORAGE MEDIUM" filed with the Chinese Patent Office on October 10, 2017.

## FIELD OF THE TECHNOLOGY

The present disclosure relates to the field of computer processing technologies, and in particular, to a video transcoding method, a computer device, and a storage medium.

## BACKGROUND OF THE DISCLOSURE

Video transcoding refers to converting a compressed video bitstream to another video bitstream, to adapt to different network bandwidths, different terminal processing capabilities, and different user requirements. The essence of transcoding is a process of first performing decoding and then performing coding. Therefore, the bitstreams before and after transcoding may comply with different video coding standards.

Traditionally, a client uploads a compressed video to a server and the server transcodes the received video. The conventional video transcoding method results in a high bandwidth costs.

J. Yang et al., "A rate control algorithm for MPEG-2 to H.264 realtime transcoding", Visual Communications and Image Processing, Beijing, China, 2005, discloses a transcoding method for transcoding a MPEG-2 coded image into a H.264 coded image in which a lower bound of QP employed by H.264 is given to avoid consuming meaningless bits.

US 6,441,754 B1 discloses a transcoding architecture and a consumer set-top box with storage capability that is based on the transcoding architecture and capable of operating efficiently in an all-digital environment. In a preferred embodiment, a digital-VIDEO DEVICE employs an MPEG-2 compliant transcoder that includes a simplified cascaded decoder and encoder, and is capable of performing determinable bitrate re-encoding without conducting motion estimation. During recording, the decoder receives and processes a compressed source bitstream, producing a decoded bitstream that includes reconstructed video and preserved motion vectors. The encoder "re-encodes" the decoded bitstream using the preserved motion vectors and performs any applicable bitrate modifications. The re-encoded bitstream is then stored.

K.-d. Seo et al., "Dynamic Bit-Rate Reduction Based on the Requantization and Frame-Skipping for MPEG-1 to MPEG-4 Transcoder", IEICE Trans. Fundamentals, Vol. E87-A, No. 4, April 2004, discloses dynamic bit-rate reduction based on requantization and frame-skipping for MPEG-1 to MPEG-4 transcoder in which an estimated $Q2(n,m-1)$ is increased by 2 when $Q1(n,m)-Q2(n,m-1)$ is greater than 0.

## SUMMARY

Embodiments of the present disclosure provide a video transcoding method, a computer device, and a storage medium. The invention is set out in the appended set of claims.

Details of one or more embodiments of the present disclosure are provided in the following accompanying drawings and descriptions. Other features, objectives, and advantages of the present disclosure become clear in the specification, the accompanying drawings, and the claim

## BRIEF DESCRIPTION OF THE DRAWINGS

To describe the technical solutions in the embodiments of the present disclosure or in the existing technology more clearly, the following briefly introduces the accompanying drawings required for describing the embodiments or the existing technology. Apparently, the accompanying drawings in the following description show merely some embodiments of the present disclosure, and a person of ordinary skill in the art may still derive other drawings from these accompanying drawings without creative efforts.

FIG. 1 is a diagram of an application environment of a video transcoding method according to an embodiment;
FIG. 2 is a flowchart of a video transcoding method according to an embodiment;
FIG. 3 is a flowchart of a method for determining a current reference quantization parameter corresponding to a current coding unit according to an embodiment;
FIG. 4 is a flowchart of a method for determining a current reference quantization parameter corresponding to a current coding unit according to another embodiment;
FIG. 5 is a flowchart of a method for determining a target coding quantization parameter according to an embodiment;
FIG. 6 is a flowchart of a method for classifying current video frames according to frame average quantization parameters corresponding to the current video frames according to an embodiment;
FIG. 7 is a schematic flowchart of video transcoding according to an embodiment;
FIG. 8 is a schematic flowchart of coding a coding unit according to an embodiment;
FIG. 9 is a flowchart of a video transcoding method according to another embodiment;
FIG. 10 is a structural block diagram of a video transcoding apparatus according to an embodiment;
FIG. 11 is a structural block diagram of a determining module according to an embodiment;

FIG. 12 is a structural block diagram of a video transcoding apparatus according to another embodiment;

FIG. 13 is a structural block diagram of a video transcoding apparatus according to still another embodiment; and

FIG. 14 is a diagram of an internal structure of a computer device according to an embodiment.

## DESCRIPTION OF EMBODIMENTS

To make the objectives, the technical solutions, and the advantages of the present disclosure clearer, the following further describes the technical solutions of the present disclosure in detail with reference to the accompanying drawings and the embodiments. It should be understood that the specific embodiments described herein are only used to describe the technical solutions of the present disclosure, instead of limiting the technical solutions of the present disclosure.

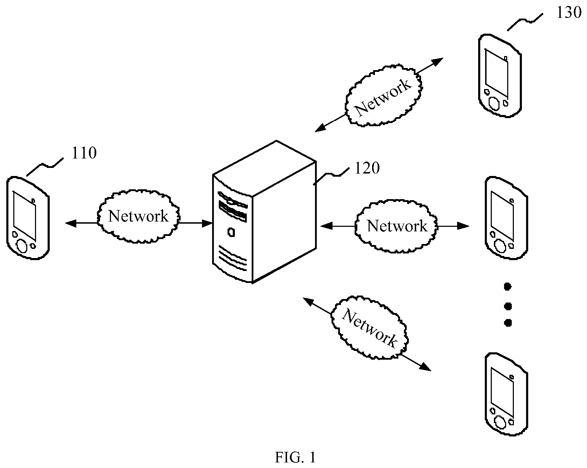

FIG. 1 is a diagram of an application environment of a video transcoding method according to an embodiment. Referring to FIG. 1, the video transcoding method is applied to a video transcoding system. The video transcoding method may be applied to a server in the video transcoding system or may be applied to a terminal in the video transcoding system. The video transcoding system includes a first terminal 110, a server 120, and a second terminal 130. The first terminal 110 and the server 120 are connected through a network, and the server 120 and the second terminal 130 are connected through a network. The first terminal 110 and the second terminal 130 may be specifically desktop terminals or mobile terminals. The mobile terminal may be specifically at least one of a mobile phone, a tablet computer, a notebook computer, and the like. The server 120 may be implemented by an independent server or a server cluster formed by multiple servers. In an embodiment, the first terminal first compresses an original video to obtain an initial compressed video, and then uploads the initial compressed video to the server 120. After receiving the initial compressed video, the server 120 obtains an initial quantization parameter used to encode an initial coding unit for generating the initial compressed video, determines, according to the initial quantization parameter used to encode the initial coding unit, a current reference quantization parameter corresponding to a current coding unit in a current video frame, determines an estimated coding quantization parameter corresponding to the current coding unit, determines a difference between the estimated coding quantization parameter corresponding to the current coding unit and the current reference quantization parameter corresponding to the current coding unit, increases, according to the difference, the estimated coding quantization parameter corresponding to the current coding unit, to obtain a target coding quantization parameter, and codes the current coding unit according to the target coding quantization parameter. Finally, a target compressed video obtained by the transcoding may be sent to the second terminal 130.

In another embodiment, the video transcoding method may be directly applied to the terminal 110 or 130. The terminal 110 or 130 obtains an initial quantization parameter used to encode an initial coding unit for generating the initial compressed video, determines, according to the initial quantization parameter used to encode the initial coding unit, a current reference quantization parameter corresponding to a current coding unit in a current video frame, determines an estimated coding quantization parameter corresponding to the current coding unit, determines a difference between the estimated coding quantization parameter corresponding to the current coding unit and the current reference quantization parameter corresponding to the current coding unit, increases, according to the difference, the estimated coding quantization parameter corresponding to the current coding unit, to obtain a target coding quantization parameter, and codes the current coding unit according to the target coding quantization parameter.

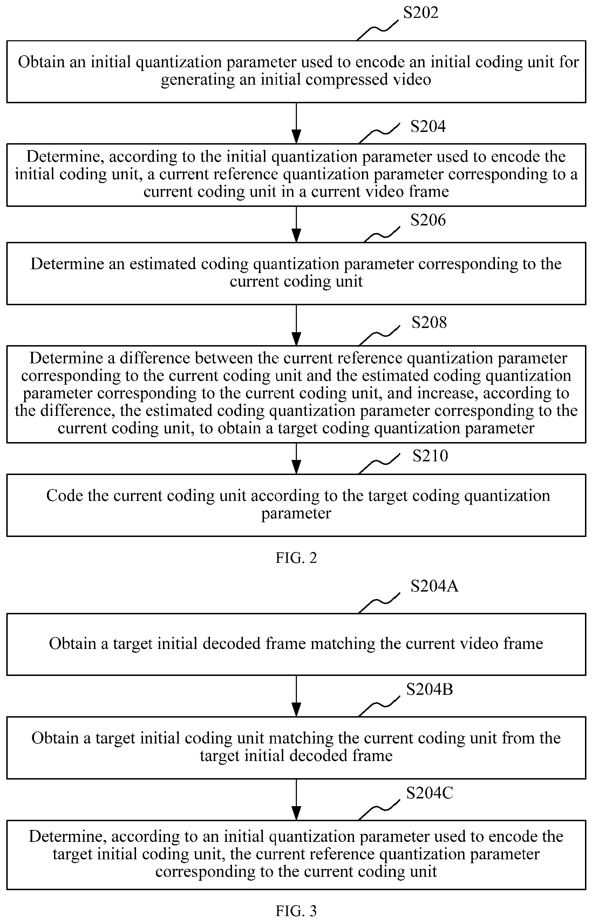

As shown in FIG. 2, in an embodiment, a video transcoding method is provided. The video transcoding method may be applied to a server or a terminal. This embodiment is described by using an example in which the method is applied to the server 120 in FIG. 1. Referring to FIG. 2, the video transcoding method specifically includes the following steps S202 to S210.

In step S202, an initial quantization parameter used to encode an initial coding unit for generating an initial compressed video is obtained.

In an embodiment, a quantization parameter (QP) is a parameter used to represent a quantization step size and can affect image quality. A small quantization parameter corresponds to a good image quality. For example, in the H.264 video coding standard, a quantization parameter QP is a sequence number of a quantization step (Qstep), which ranges from 0 to 51. When the quantization parameter QP is of the smallest value 0, it indicates that quantization is the finest. On the contrary, when the quantization parameter QP is of the largest value 51, it indicates that quantization is the coarsest. A quantization parameter is positively correlated with a compression rate. To be specific, a small quantization parameter indicates a small compression rate, and a large quantization parameter indicates a large compression rate. The compression rate herein is a ratio of a size before compression to a size after compression.

A video is formed by video frames, each video frame includes a coding unit, and each coding unit corresponds to a quantization parameter. In coding, the quantization parameter corresponding to each coding unit needs to be calculated, and the coding unit is coded according to the corresponding quantization parameter. Regarding the current video transcoding, a video before transcoding is referred to as an initial compressed video.

The initial coding unit is a coding unit included in the initial compressed video, and the initial quantization parameter is a quantization parameter corresponding to the initial coding unit.

The coding unit is a unit forming a video frame. The coding unit may be a coding block in the video frame or may be a coding slice in the video frame. The coding slice includes multiple coding blocks. Because coding blocks in a coding slice correspond to a same quantization parameter, each coding slice may be considered as one coding unit and corresponds to one quantization parameter.

In an embodiment, the initial compressed video is obtained and the initial compressed video is decoded, to obtain the initial decoded frame. The initial decoded frame is a decoded video frame obtained by decoding the initial compressed video. An initial quantization parameter corresponding to each initial coding unit is obtained.

In step S204, it is determined, according to the initial quantization parameter used to encode the initial coding unit, a current reference quantization parameter corresponding to a current coding unit in a current video frame.

The current video frame is a current to-be-coded video frame, and the current coding unit is a coding unit in the current video frame. The current reference quantization parameter is a reference value used to compare with an estimated coding quantization parameter corresponding to the current coding unit. Specifically, the essence of video transcoding is a process of first performing decoding and then performing coding again. To transcode the initial compressed video, the initial compressed video first needs to be decoded, to obtain the initial decoded frame, and the initial decoded frame is then used as a to-be-coded current video frame, so as to be recoded.

The current coding unit in the current video frame is obtained, and the current reference quantization parameter corresponding to the current coding unit is calculated according to the initial quantization parameter used to encode the initial coding unit. The current reference quantization parameter corresponding to the current coding unit can be calculated by multiple methods. In an embodiment, a target initial coding unit matching the current coding unit is first obtained. Because the initial decoded frame obtained by decoding is used as a current to-be-coded video frame for recoding, the initial decoded frame and the current to-be-coded video frame have a one-to-one correspondence. A specification of the initial coding unit in the initial decoded frame may be the same as or different from that of the current coding unit in the current to-be-coded video frame. For example, the initial coding unit is a coding block, and the current coding unit may be a coding block or may be a coding slice. Regardless of whether specifications of the current coding unit and the initial coding unit are the same, there is a matching relationship between the current coding unit and the initial coding unit. For example, if the current coding unit is a coding slice but the initial coding unit is a coding block, the current coding unit matches multiple corresponding initial coding units. In an embodiment, a target initial coding unit matching the current coding unit is first obtained, and the current reference quantization parameter corresponding to the current coding unit is then calculated according to an initial quantization parameter used to encode the target initial coding unit. Specifically, the initial quantization parameter used to encode the target initial coding unit may be subtracted by a value to obtain the current reference quantization parameter.

In another embodiment, the target initial decoded frame corresponding to the current video frame is obtained, initial quantization parameters used to encode initial coding units in the target initial decoded frame are obtained, the initial quantization parameters used to encode the initial coding units are sorted according to an ascending or descending order to obtain a sorting result, and the current reference quantization parameter corresponding to the current coding unit is determined according to the sorting result.

In step S206, an estimated coding quantization parameter corresponding to the current coding unit is determined.

In an embodiment, the to-be-coded current coding unit is obtained, and an estimated coding quantization parameter corresponding to the current coding unit is calculated. Because coding relies on a quantization parameter corresponding to the coding unit, before coding, the estimated coding quantization parameter corresponding to the coding unit needs to be first calculated. Calculation of the estimated coding quantization parameter is related to factors such as the image complexity and the target bit rate. The estimated coding quantization parameter may be calculated by using a bit rate control algorithm, or an adaptive quantization parameter calculation method, or other algorithms. Herein, calculation of the estimated coding quantization parameter is not limited.

In step S208, a difference between the current reference quantization parameter corresponding to the current coding unit and the estimated coding quantization parameter corresponding to the current coding unit is determined, and according to the difference, the estimated coding quantization parameter corresponding to the current coding unit is increased, to obtain a target coding quantization parameter.

In an embodiment, the difference is a difference value between the current reference quantization parameter corresponding to the current coding unit and the estimated coding quantization parameter. According to the calculated difference, the estimated coding quantization parameter corresponding to the current coding unit is increased, to obtain the target coding quantization parameter. The target coding quantization parameter is a quantization parameter finally used for coding.

In an embodiment, the current reference quantization parameter reflects a quantization parameter used to encode the initial coding unit, and the quantization parameter reflects image fineness. The data obtained by decoding the initial compressed video is a compressed video instead of the original video. If the compressed video has undesirable quality, using a small quantization parameter for recompressing will not improve the quality of the recompressed radio but waste a bit rate. Therefore, the current reference quantization parameter is used as a reference value to calculate the difference between the current reference quantization parameter and the estimated coding quantization parameter. When the difference is large, it indicates that the estimated coding quantization parameter is small, and thus the estimated coding quantization parameter is increased according to the difference, to increase a compression rate. In an embodiment, an increase adjustment degree of the quantization parameter is positively correlated with the difference, that is, a large difference leads to a large increase adjustment degree of the quantization parameter. The estimated coding quantization parameter is properly increased according to the difference. Therefore, the method can improve a coding compression rate to avoid waste of bit rate, thereby reducing corresponding bandwidth costs while ensuring subjective quality.

In step S210, the current coding unit is coded according to the target coding quantization parameter.

In an embodiment, the target coding quantization parameter is a final coding quantization parameter corresponding to the current coding unit. Specifically, the current coding unit is coded according to the target coding quantization parameter obtained by adjustment, to obtain a corresponding compressed video. Because the calculated coding quantization parameter is increased, the video compression rate is increased, which reduces a corresponding bit rate while ensuring subjective quality, thereby reducing corresponding bandwidth costs.

In an embodiment, to ensure that image quality corresponding to important content (referred to as "target content" below) in a video is not affected while a video compression rate is improved, the current to-be-transcoded video frame is analyzed. If the current video frame includes the target content (for example, a human face), the current coding quantization parameter is not increased.

In the video transcoding method, the initial quantization parameter used to encode the initial coding unit for generating the initial compressed video is obtained, the current reference quantization parameter corresponding to the current coding unit is determined according to the initial quantization parameter, the estimated coding quantization parameter is increased according to the difference between the estimated coding quantization parameter and the current reference quantization parameter corresponding to the current coding unit, to obtain the target coding quantization parameter, and finally, the current coding unit is coded according to the target quantization parameter. Therefore, by increasing the estimated coding quantization parameter while ensuring subjective quality, the compression efficiency is improved and thus bandwidth costs is reduced.

As shown in FIG. 3, in an embodiment, step S204 of obtaining the current coding unit in the current video frame, and determining, according to the initial quantization parameter used to encode the initial coding unit, a current reference quantization parameter corresponding to the current coding unit includes steps S204A to S204C.

In step S204A, a target initial decoded frame matching the current video frame is obtained.

In an embodiment, the initial decoded frame is a video frame obtained by decoding the initial compressed video. The target initial decoded frame is an initial decoded frame matching the current video frame. The current video frame is a current to-be-coded video frame. Specifically, the server receives the initial compressed video and decodes the initial compressed video, to obtain the initial decoded frame, and uses the initial decoded frame as a to-be-coded video frame to code the video again. Therefore, the to-be-coded video frame and the initial decoded frame have a one-to-one correspondence. A matching relationship between the to-be-coded video frame and the initial decoded frame may be predefined. In an embodiment, the initial decoded frame corresponding to the current video frame may be directly used as the target initial decoded frame. In another embodiment, the current video frame may be matched with multiple initial decoded frames. For example, the current video frame may be matched with the target initial decoded frames formed by the corresponding initial decoded frame and a neighboring decoded frame of the initial decoded frame. For example, it is assumed that the initial compressed video is decoded to obtain six initial decoded frames, which are respectively 1, 2, 3, 4, 5, and 6, and the current to-be-coded video frame is 3. The target initial decoded frame matching the current video frame 3 may be obtained according to a predetermined rule. For example, the corresponding initial decoded frame 3 is directly used as a matched target initial decoded frame, or the initial decoded frames 2, 3, and 4 are all used as target initial decoded frames.

In step S204B, a target initial coding unit matching the current coding unit is obtained from the target initial decoded frame.

In an embodiment, the current coding unit refers to a current to-be-coded coding unit, and the current coding unit is included in the current video frame. The target initial coding unit matching the current coding unit is obtained from the target initial decoded frame. A matching relationship between a to-be-coded coding unit and an initial coding unit may be similarly pre-defined. For example, in an embodiment, the initial coding unit in the target initial decoded frame may be used as the target initial coding unit matching the current coding unit. In another embodiment, multiple initial decoding units in the target initial decoded frame may be all used as the target initial coding unit matching the current coding unit. An initial coding unit corresponding to a location of the current coding unit in the target initial decoded frame may be used as the target initial coding unit matching the current coding unit.

In step S204C, according to an initial quantization parameter used to encode the target initial coding unit, the current reference quantization parameter corresponding to the current coding unit is determined.

In an embodiment, the current reference quantization parameter is a reference used to compare with the estimated coding quantization parameter corresponding to the current coding unit, and subsequently, the estimated coding quantization parameter is adjusted according to the current reference quantization parameter. Specifically, the initial quantization parameter used to encode the target initial coding unit is obtained, and the current reference quantization parameter corresponding to the current coding unit is calculated according to the initial quantization parameter. In an embodiment, assuming that an initial quantization parameter of an initial decoded frame corresponding to a current video frame cannot be obtained, an initial quantization parameter corresponding to a neighboring frame may be obtained as a corresponding initial quantization parameter because quantization parameters of neighboring frames are close to each other. The current reference quantization parameter corresponding to the current coding unit is then determined. In an embodiment, the initial quantization parameter may be subtracted by a preset value to obtain the current reference quantization parameter corresponding to the current coding unit.

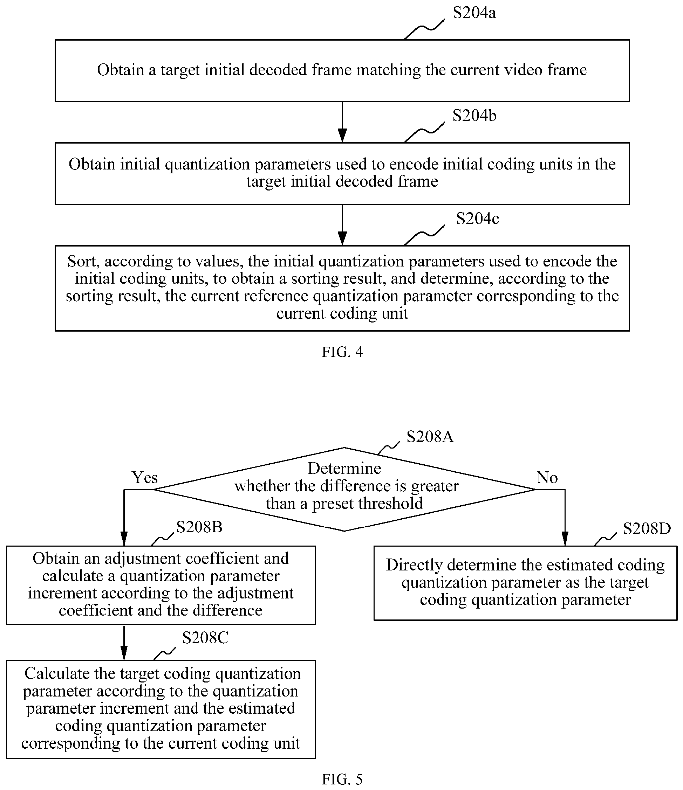

As shown in FIG. 4, in an embodiment, step S204 of obtaining the current coding unit in the current video frame, and determining, according to the initial quantization parameter used to encode the initial coding unit, a current reference quantization parameter corresponding to the current coding unit includes steps S204a to S204c.

In step S204a, a target initial decoded frame matching the current video frame is obtained.

In an embodiment, the initial decoded frame is a video frame obtained by decoding the initial compressed video. The target initial decoded frame is an initial decoded frame matching the current video frame. The current video frame is a current to-be-coded video frame. Specifically, the server receives the initial compressed video and decodes the initial compressed video, to obtain the initial decoded frame, and uses the initial decoded frame as a to-be-coded video frame to code the video again. Therefore, the to-be-coded video frame and the initial decoded frame have a one-to-one correspondence. A matching relationship between the to-be-coded video frame and the initial decoded frame may be predefined. In an embodiment, the initial decoded frame corresponding to the current video frame may be directly used as the target initial decoded frame. In another embodiment, the current video frame may be matched with multiple initial decoded frames. For example, the current video frame may be matched with the target initial decoded frames formed by the corresponding initial decoded frame and a neighboring decoded frame of the initial decoded frame. For example, it is assumed that the initial compressed video is decoded to obtain six initial decoded frames, which are respectively 1, 2, 3, 4, 5, and 6, and the current to-be-coded video frame is 3. The target initial decoded frame matching the current video frame 3 may be obtained according to a predetermined rule. For example, the corresponding initial decoded frame 3 is directly used as a matched target initial decoded frame, or the initial decoded frames 2, 3, and 4 are all used as matched target initial decoded frames.

In step S204b, initial quantization parameters used to encode the initial coding units in the target initial decoded frame are obtained.

In an embodiment, each initial decoded frame includes multiple initial coding units, and after the matched target initial decoded frame is obtained, the initial quantization parameter corresponding to each initial coding unit in the target initial decoded frame are obtained.

In step S204c, according to an ascending or descending order, the initial quantization parameters used to encode the initial coding units are sorted to obtain a sorting result, and according to the sorting result, the current reference quantization parameter corresponding to the current coding unit is determined.

In an embodiment, after the initial quantization parameters used to encode the initial coding units are obtained, the initial quantization parameters are sorted according to values of the initial quantization parameters, to obtain the corresponding sorting result. Sorting may be performed in descending order or in ascending order. Subsequently, the current reference quantization parameter corresponding to the current coding unit is determined according to the sorting result. In an embodiment, a penultimate smallest initial quantization parameter obtained by sorting may be used as the current reference quantization parameter corresponding to the current coding unit. In another embodiment, first 10% small initial quantization parameters may be obtained, an average of the 10% initial quantization parameters is calculated, and the calculated average is used as the current reference quantization parameter corresponding to the current coding unit.

In an embodiment, the step of determining, according to the sorting result, the current reference quantization parameter corresponding to the current coding unit includes: determining the smallest initial quantization parameter in the sorting result as the current reference quantization parameter corresponding to the current coding unit.

In an embodiment, after the sorting result is obtained, the smallest initial quantization parameter in the sorting result is used as the current reference quantization parameter corresponding to the current coding unit. Because a smaller quantization parameter indicates better fineness, the smallest value in the sorting result is used as the current reference quantization parameter, to subsequently help performing increase adjustment on the estimated coding quantization parameter according to the current reference quantization parameter, to improve a corresponding compression rate and reduce bandwidth costs.

In an embodiment, the step of obtaining the current coding unit in the current video frame, and determining, according to the initial quantization parameter used to encode the initial coding unit, a current reference quantization parameter corresponding to the current coding unit includes: obtaining an initial video coding standard corresponding to the initial compressed video, and obtaining a current video coding standard corresponding to the current video frame; determining a mapping relationship between quantization parameters according to the initial video coding standard and the current video coding standard; and obtaining the current reference quantization parameter according to the initial quantization parameter used to encode the initial coding unit and the mapping relationship.

In an embodiment, if different video compression standards are used before and after transcoding, to ensure that compression qualities corresponding to quantization parameters are similar to each other, an original quantization parameter should be mapped into a quantization parameter in the current video coding standard corresponding to the current video frame. The mapping relationship is determined according to an initial video coding standard and a current video coding standard. Assuming that the initial video coding standard and the current video coding standard are the same, values of the quantization parameters before and after mapping are the same, and a corresponding formula may be represented as: $f(qp) = qp$. If the initial video coding standard and the current video coding standard are different, the corresponding formula may be represented as $qp' = f_i(qp)$, where $f_i$ is a linear discrete mapping function in a mapping function F. A selection rule of $f_i$ is represented as follows: $f_i = F(S_1, S_2)$, where $S_1$ is a coding standard of the initial compressed video and $S_2$ is the current video coding standard.

As shown in FIG. 5, step S208 of determining a difference between the current reference quantization parameter corresponding to the current coding unit and the estimated coding quantization parameter corresponding to the current coding unit, and increasing, according to the difference, the estimated coding quantization parameter corresponding to the current coding unit, to obtain a target coding quantization parameter includes steps S208A to S208D.

In step S208A, it is determined whether the difference is greater than a preset threshold, and if yes, step S208B is performed, or if not, step S208D is performed.

In an embodiment, the difference is a difference value between the current reference quantization parameter and the estimated coding quantization parameter. It is determined whether the difference is greater than the preset threshold. If the difference is greater than the preset threshold, it indicates that the estimated coding quantization parameter should be increased. Then an adjustment coefficient is obtained, and a quantization parameter increment is calculated according to the adjustment coefficient and the difference. If the difference is not greater than the preset threshold, the estimated coding quantization parameter does not need to be adjusted, and the estimated coding quantization parameter is directly used as the target coding quantization parameter.

In step S208B, an adjustment coefficient is obtained and a quantization parameter increment is calculated according to the adjustment coefficient and the difference.

In an embodiment, the adjustment coefficient is a coefficient used to control an adjustment degree, and may be preset. After the difference is calculated, the corresponding quantization parameter increment may be calculated according to the adjustment coefficient and the difference. In an embodiment, the product of the adjustment coefficient and the difference may be directly used as the quantization parameter increment. In another embodiment, the product of the adjustment coefficient and the difference plus a constant may be used as the quantization parameter increment.

In step S208C, the target coding quantization parameter is calculated according to the quantization parameter increment and the estimated coding quantization parameter corresponding to the current coding unit.

The quantization parameter increment is an adjustment amount by which the estimated coding quantization parameter is increased, and an adding operation is performed on the quantization parameter increment and the estimated coding quantization parameter to obtain the target coding quantization parameter.

In step S208D, the estimated coding quantization parameter is determined as the target coding quantization parameter.

If the difference is less than or equal to a preset threshold, the estimated coding quantization parameter is directly used as the target coding quantization parameter, without requiring an adjustment.

The current reference quantization parameter is determined according to the quantization parameter corresponding to the initial coding unit, so that the current reference quantization parameter reflects the quantization parameter used when the initial coding unit is coded, and the quantization parameter reflects image fineness. Because a compressed video instead of an original video is obtained by decoding the initial-compressed video, if the compressed video has undesirable quality, video quality cannot be further improved even though a small quantization parameter is used for transcoding, and instead a bit rate is wasted. Therefore, if the difference between the current reference quantization parameter and the estimated coding quantization parameter is greater than the preset threshold, it indicates that the estimated coding quantization parameter is excessively small. In this case, video quality cannot be further improved, and a bit rate is wasted. Therefore, the estimated coding quantization parameter may be properly increased, to improve a coding compression rate, avoid waste of bit rate, so as to reduce corresponding bandwidth costs while ensuring subjective quality.

In a specific embodiment, the target coding quantization parameter corresponding to the current coding unit is calculated by using a sectional function. When the calculated coding quantization parameter is greater than the current reference quantization parameter subtracted by the preset threshold, the estimated coding quantization parameter does not need to be adjusted, that is, the calculated estimated coding quantization parameter is directly used as the target coding quantization parameter. When the calculated estimated coding quantization parameter is less than or equal to the current reference quantization parameter subtracted by the preset threshold, a corresponding quantization parameter increment is calculated according to the adjustment coefficient and the difference between the current reference quantization parameter and the estimated coding quantization parameter. Then, the target coding quantization parameter is equal to a sum of the estimated coding quantization parameter and the quantization parameter increment. A specific formula is represented as follows:

$$ qp' = \begin{cases} qp + \alpha(qp_0 - qp), & qp < qp_0 - \beta \\ qp, & qp \geq qp_0 - \beta \end{cases}. $$

$qp'$ represents the target coding quantization parameter, $qp$ represents the estimated coding quantization parameter, $qp_0$ represents the current reference quantization parameter, $\alpha$ represents the adjustment coefficient, and $\beta$ represents the preset threshold.

In an embodiment, the video transcoding method further includes: obtaining a target initial decoded frame matching the current video frame; and determining, according to the initial quantization parameter used to encode the initial coding unit in the target initial decoded frame, an average reference quantization parameter corresponding to the current coding unit.

Specifically, after the target initial decoded frame matching the current video frame is obtained, the average reference quantization parameter corresponding to the current coding unit is calculated according to the initial quantization parameters used to encode the initial coding units in the target initial decoded frame. In an embodiment, the initial quantization parameters used to encode the initial coding units may be directly averaged, to calculate the average reference quantization parameter. In another embodiment, the initial quantization parameters may be sorted according to an ascending or descending order, and a value corresponding to an initial quantization parameter in the middle location is used as the average reference quantization parameter. In an embodiment, if video coding standards used before and after coding are different, the calculated average reference quantization parameter is mapped to calculate a final average reference quantization parameter.

The step of obtaining the adjustment coefficient includes: calculating a target difference between the average reference quantization parameter and the current reference quantization parameter; and calculating the adjustment coefficient according to the target difference, where the adjustment coefficient and the target difference are negatively correlated.

In an embodiment, the adjustment coefficient may be determined by calculating according to the difference between the average reference quantization parameter and the current reference quantization parameter, and the calculated difference between the average reference quantization parameter and the current reference quantization parameter is referred to as "the target difference". To avoid excessive adjustment, it is set that the adjustment coefficient and the target difference are negatively correlated. That is, when the target difference is large, the calculated adjustment coefficient is small, and when the target difference is small, the calculated adjustment coefficient is large. In an embodiment, the following formula may be used for calculating the adjustment coefficient: $\alpha = k/(qp_{ave} - qp_0)$, where $\alpha$ represents the adjustment coefficient, k represents a constant, $qp_{ave}$ represents the average reference quantization parameter, and $qp_0$ represents the current reference quantization parameter. A product of the adjustment coefficient and the target difference is used as the quantization parameter increment, to avoid excessive adjustment which impacts on image quality.

In an embodiment, the step of determining, according to the initial quantization parameter used to encode the initial coding unit in the target initial decoded frame, an average reference quantization parameter corresponding to the current coding unit includes: obtaining initial quantization parameters used to encode initial coding units in the target initial decoded frame, and calculating an average value of the initial quantization parameters used to encode the initial coding units, to obtain an average quantization parameter; and determining the average quantization parameter as the average reference quantization parameter corresponding to the current coding unit in the current video frame.

Specifically, after the target initial decoded frame matching the current video frame is obtained, the initial quantization parameters corresponding to the target initial coding units in the target initial decoded frame are obtained, an average operation is performed on the initial quantization parameters used to encode the initial coding units, to obtain the average quantization parameter, and the average quantization parameter is directly used as the average reference quantization parameter corresponding to the current coding unit in the current video frame.

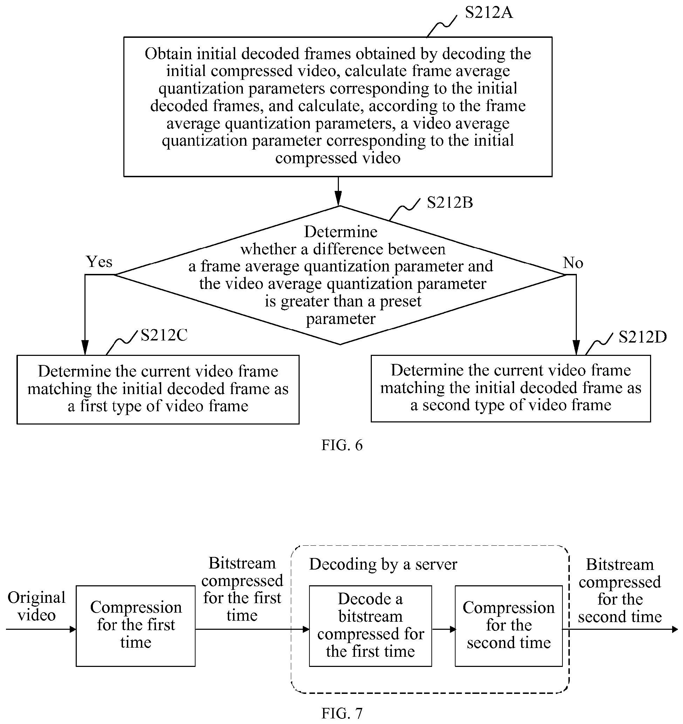

As shown in FIG. 6, in an embodiment, the video transcoding method further includes a step of classifying current video frames according to frame average quantization parameters corresponding to the current video frames. The step includes the following steps S212A to S212D.

In step S212A, initial decoded frames are obtained by decoding the initial compressed video, frame average quantization parameters corresponding to the initial decoded frames are calculated, and according to the frame average quantization parameters, a video average quantization parameter corresponding to the initial compressed video is obtained.

In an embodiment, the initial decoded frame is a video frame obtained by decoding the initial compressed video. The frame average quantization parameter is the average quantization parameter corresponding to the initial decoded frame. The frame average quantization parameter may be obtained by obtaining the initial quantization parameters used to encode the initial coding units in the initial decoded frame, and performing an average operation on the initial quantization parameters used to encode the initial coding units to obtain an average as the frame average quantization parameter. Similarly, after the frame average quantization parameters corresponding to the initial decoded frames are calculated, the video average quantization parameter corresponding to the initial compressed video may be calculated according to the frame average quantization parameters corresponding to the initial decoded frames in the initial compressed video.

In step S212B, it is determined whether a difference between a frame average quantization parameter of an initial decoded frame and the video average quantization parameter is greater than a preset parameter; and if yes, step S212C is performed, or if not, step S212D is performed.

In an embodiment, the difference between the frame average quantization parameter and the video average quantization parameter is determined. If the difference is greater than the preset parameter (for example, 5), the video frame is determined as a first type of video frame; otherwise, the video frame is determined as a second type of video frame.

In step S212C, the current video frame matching the initial decoded frame is determined as a first type of video frame.

In step S212D, the current video frame matching the initial decoded frame is determined as a second type of video frame.

In an embodiment, the initial decoded frames are classified into two types according to the difference between the video average quantization parameter and the frame average quantization parameter. Because the initial decoded frame obtained by decoding is used as the to-be-coded current video frame, the initial decoded frame and the current video frame are in a one-to-one correspondence. When the difference between the frame average quantization parameter and the video average quantization parameter is greater than the preset parameter, the current video frame corresponding to the initial decoded frame is determined as a first type of video frame; otherwise, the current video frame corresponding to the initial decoded frame is determined as a second type of video frame. By classifying the to-be-coded video frames into two types, the coding quantization parameters corresponding to different types of video frames can be adjusted in different manners. If the difference between the frame average quantization parameter and the video average quantization parameter is large, it indicates that a quantization parameter corresponding to the initial coding unit in the video frame is large and corresponding image quality is poor. Otherwise, image quality is desirable. By classifying the to-be-coded video frames into two types according to the frame average quantization parameter, the adjustment coefficient can be adjusted in different manners.

Step S208B of obtaining an adjustment coefficient and calculate a quantization parameter increment according to the adjustment coefficient and the difference includes: when the current video frame including the current coding unit is the first type of video frame, obtaining a first adjustment coefficient, and calculating the quantization parameter increment according to the first adjustment coefficient and the difference; and when the current video frame including the current coding unit is the second type of video frame, obtaining a second adjustment coefficient, and calculating the quantization parameter increment according to the second adjustment coefficient and the difference.

In an embodiment, to further improve compression efficiency while ensuring subjective quality, different adjustment coefficients are set for different types of video frames, and for video frames with large frame average quantization parameters, the adjustment coefficient may be correspondingly set to be large. As the frame average quantization parameter corresponding to the initial decoded frame is large, it indicates that original frame image quality is already very poor. Therefore, coding quality cannot be improved even though a small quantization parameter is used now, and thus the adjustment coefficient is increased to further improve compression efficiency. On the contrary, for video frames with small frame average quantization parameters, the adjustment coefficient may be correspondingly set to be small.

To better understand content of this solution, this solution is described by a specific application scenario. FIG. 7 is a schematic flowchart of video transcoding according to an embodiment. For ease of description, a video that is not compressed by the terminal is referred to as an "original video", a bitstream that is compressed by the terminal is referred to as a "bitstream compressed for the first time", i.e., a to-be-transcoded bitstream, and a compression process of the terminal is referred to as "compression for the first time". The terminal uploads the bitstream compressed for the first time to a server. A transcoding process of the server is divided into "decoding of the bitstream compressed for the first time" and "compression for the second time". A bitstream obtained by the server after transcoding is referred to as a "bitstream compressed for the second time", and compression performed by the server is referred to as "compression for the second time". This description mainly focuses on transcoding by the server. Specifically, after receiving the bitstream compressed for the first time, the server first decodes the bitstream compressed for the first time, obtains the initial quantization parameter of each coding unit in the video frame compressed for the first time, calculates, according to the initial quantization parameter, a reference value of a second-time compression quantization parameter corresponding to each coding unit, calculates the second-time compression quantization parameter of each coding unit, performs increase adjustment on the calculated second-time compression quantization parameter according to the reference value of the second-time compression quantization parameter, to obtain a second-time compression target quantization parameter, and codes the coding unit according to the second-time compression target quantization parameter, to obtain a bitstream compressed for the second time.

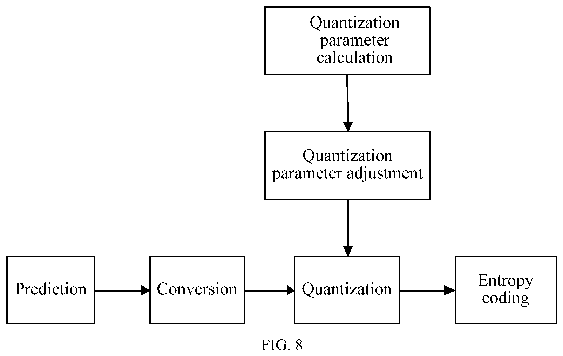

FIG. 8 is a schematic flowchart of obtaining a quantization parameter for each coding unit and coding the coding unit according to an embodiment. First, prediction is performed on order to reduce spatial redundancy and temporal redundancy of a video image by intra prediction and inter prediction. Next, conversion is performed, and conversion from time domain to frequency domain eliminates correlation between neighboring data, that is, eliminates space redundancy. Subsequently, quantization is performed, and different from a conventional practice of directly using a calculated quantization parameter, the calculated quantization parameter is adjusted, to improve compression efficiency and avoid bitstream waste. Finally, the coding unit is coded by using entropy coding.

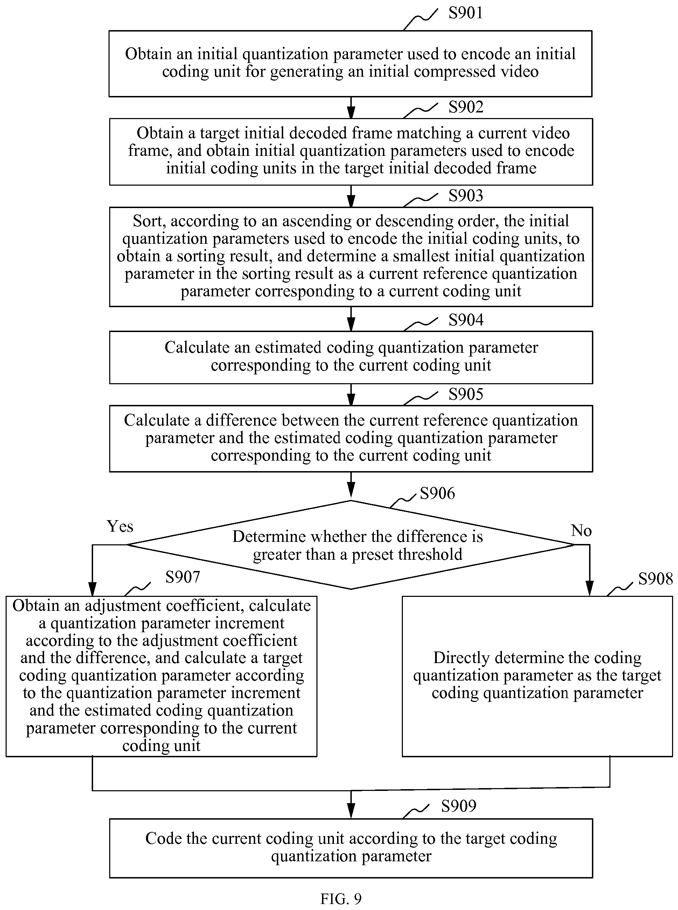

As shown in FIG. 9, in an embodiment, a video transcoding method is provided. The method specifically includes the following steps S901 to S909.

In step S901, an initial quantization parameter used to encode an initial coding unit for generating an initial compressed video is obtained.

In step S902, a target initial decoded frame matching a current video frame is obtained, and initial quantization parameters used to encode initial coding units in the target initial decoded frame are obtained.

In step S903, according to an ascending or descending order, the initial quantization parameters used to encode the initial coding units are sorted, to obtain a sorting result, and a smallest initial quantization parameter in the sorting result is determined as a current reference quantization parameter corresponding to a current coding unit.

In step S904, an estimated coding quantization parameter corresponding to the current coding unit is calculated.

In step S905, a difference between the current reference quantization parameter corresponding to the current coding unit and the estimated coding quantization parameter corresponding to the current coding unit is calculated.

In step S906, it is determined whether the difference is greater than a preset threshold, and if yes, step S907 is performed, or if not, step S908 is performed.

In step S907, an adjustment coefficient is obtained, a quantization parameter increment is calculated according to the adjustment coefficient and the difference, and a target coding quantization parameter is calculated according to the quantization parameter increment and the estimated coding quantization parameter corresponding to the current coding unit.

In step S908, the estimated coding quantization parameter is determined as the target coding quantization parameter.

In step S909, the current coding unit is coded according to the target coding quantization parameter.

It should be understood that although the steps in the flowchart are sequentially shown with the indication of arrows, the steps are not necessarily sequentially performed according to a sequence indicated by the arrows. Unless clearly described in this specification, a sequence of performing the steps is not strictly limited, and the steps may be performed in another sequence. Besides, at least some steps may include multiple sub-steps or multiple stages, the sub-steps or stages are not necessarily performed at a same moment and may be performed at different moments, the sub-steps or stages are not necessarily sequentially performed, and the sub-steps or stages and at least some of other steps or sub-steps or stages of other steps may be performed in turn or alternately.

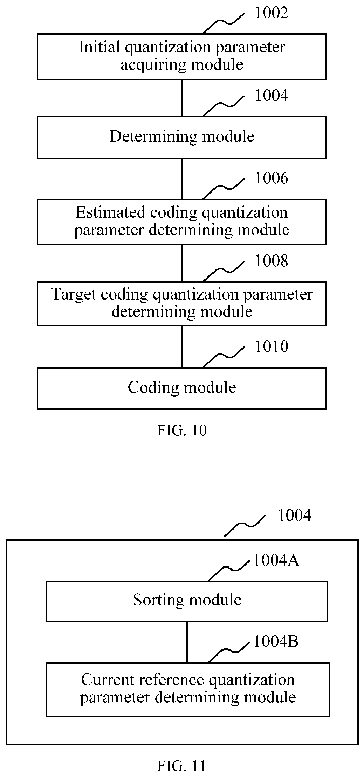

As shown in FIG. 10, a video transcoding apparatus is provided. The apparatus includes:

an initial quantization parameter acquiring module 1002, configured to obtain an initial quantization parameter used to encode an initial coding unit for generating an initial compressed video;

a determining module 1004, configured to obtain a current coding unit in a current video frame, and determine, according to the initial quantization parameter used to encode the initial coding unit, a current reference quantization parameter corresponding to the current coding unit;

an estimated coding quantization parameter determining module 1006, configured to determine an estimated coding quantization parameter corresponding to the current coding unit;

a target coding quantization parameter determining module 1008, configured to determine a difference between the current reference quantization parameter corresponding to the current coding unit and the estimated coding quantization parameter corresponding to the current coding unit, and increase, according to the difference, the estimated coding quantization parameter corresponding to the current coding unit, to obtain a target coding quantization parameter; and

a coding module 1010, configured to code the current coding unit according to the target coding quantization parameter.

In an embodiment, the determining module 1004 is further configured to: obtain a target initial decoded frame matching the current video frame; obtain a target initial coding unit matching the current coding unit from the target initial decoded frame; and determine, according to an initial quantization parameter used to encode the target initial coding unit, the current reference quantization parameter corresponding to the current coding unit.

As shown in FIG. 11, in an embodiment, the determining module 1004 includes:

a sorting module 1004A, configured to: obtain a target initial decoded frame matching a current video frame, and obtain initial quantization parameters used to encode initial coding units in the target initial decoded frame; and sort, according to an ascending or descending order, the initial quantization parameters used to encode the initial coding units, to obtain a sorting result; and

a current reference quantization parameter determining module 1004B, configured to determine, according to the sorting result, the current reference quantization parameter corresponding to the current coding unit.

In an embodiment, the current reference quantization parameter determining module is further configured to use the smallest initial quantization parameter in the sorting result as the current reference quantization parameter corresponding to the current coding unit

In an embodiment, the determining module 1004 is further configured to obtain an initial video coding standard corresponding to the initial compressed video, and obtain a current video coding standard corresponding to the current video frame; determine a mapping relationship between quantization parameters according to the initial video coding standard and the current video coding standard; and obtain the current reference quantization parameter according to the initial quantization parameter used to encode the initial coding unit and the mapping relationship.

In an embodiment, the target coding quantization parameter determining module 1008 is further configured to when the difference is greater than a preset threshold, obtain an adjustment coefficient, and calculate a quantization parameter increment according to the adjustment coefficient and the difference; and calculate the target coding quantization parameter according to the quantization parameter increment and the estimated coding quantization parameter corresponding to the current coding unit.

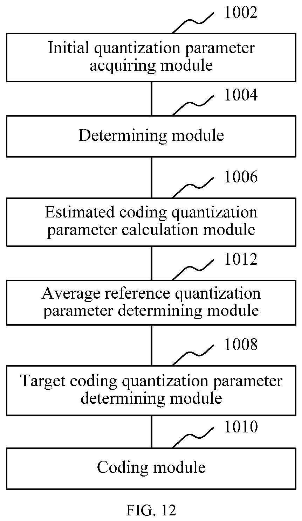

As shown in FIG. 12, in an embodiment, the video transcoding apparatus further includes:

an average reference quantization parameter determining module 1012, configured to obtain a target initial decoded frame matching the current video frame; and determine, according to the initial quantization parameter used to encode the initial coding unit in the target initial decoded frame, an average reference quantization parameter corresponding to the current coding unit.

The target coding quantization parameter determining module 1008 is further configured to: calculate a target difference between the average reference quantization parameter and the current reference quantization parameter; and calculate the adjustment coefficient according to the target difference, where the adjustment coefficient is positively correlated with the target difference.

In an embodiment, the average reference quantization parameter determining module 1012 is further configured to obtain initial quantization parameters used to encode initial coding units in the target initial decoded frame, and calculate an average value of the initial quantization parameters used to encode the initial coding units, to obtain an average quantization parameter; and determine the average quantization parameter as the average reference quantization parameter corresponding to the current coding unit in the current video frame.

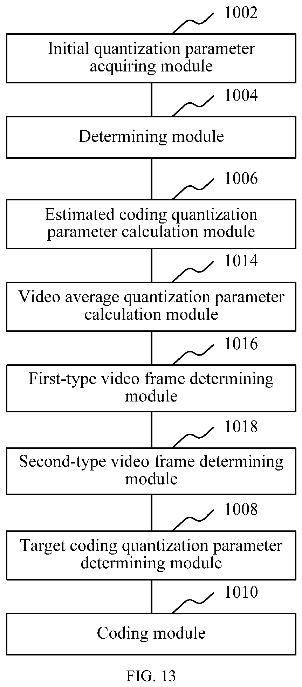

As shown in FIG. 13, in an embodiment, the video transcoding apparatus includes:

a video average quantization parameter calculation module 1014, configured to obtain initial decoded frames obtained by decoding the initial compressed video, calculate frame average quantization parameters corresponding to the initial decoded frames, and calculate, according to the frame average quantization parameters, a video average quantization parameter corresponding to the initial compressed video;

a first-type video frame determining module 1016, configured to: when a difference between the video average quantization parameter and a frame average quantization parameter of an initial decoded frame is greater than a preset parameter, determine a current video frame matching the initial decoded frame as a first type of video frame; and

a second-type video frame determining module 1018, configured to: when the difference between the video average quantization parameter and the frame average quantization parameter is less than or equal to the preset parameter, determine a current video frame matching the initial decoded frame as a second type of video frame; and

the target coding quantization parameter determining module 1008 is further configured to: when the current video frame including the current coding unit is the first type of video frame, obtain a first adjustment coefficient, and calculate the quantization parameter increment according to the first adjustment coefficient and the difference; and when the current video frame including the current coding unit is the second type of video frame, obtain a second adjustment coefficient, and calculate the quantization parameter increment according to the second adjustment coefficient and the difference.

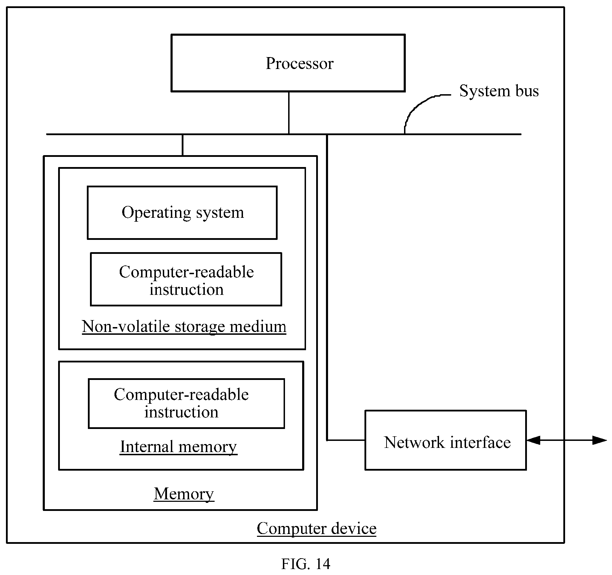

FIG. 14 is a diagram of an internal structure of a computer device according to an embodiment. The computer device may be specifically the server 120 in FIG. 1. As shown in FIG. 14, the computer device includes a processor, a memory, and a network interface connected by using a system bus. The memory includes a non-volatile storage medium and an internal memory. The non-volatile storage medium of the computer device stores an operating system, and may further store a computer-readable instruction. When the computer-readable instruction is executed by the processor, the processor is caused to perform the video transcoding method. The internal memory may also store a computer-readable instruction, and when the computer-readable instruction is executed by the processor, the processor is caused to perform the video transcoding method.

A person skilled in the art may understand that the structure shown in FIG. 14 is only a block diagram of a partial structure related to the solution of the present disclosure, and does not limit the computer device to which the solution of the present disclosure is applied. Specifically, the computer device may include more or less components than those shown in the figure, or some components may be combined, or different component deployment may be used.

In an embodiment, the video transcoding apparatus provided in the present disclosure may be implemented in a form of a computer-readable instruction, and the computer-readable instruction may run on the computer device shown in FIG. 14. The memory of the computer device may store program modules forming the video transcoding apparatus, for example, the initial quantization parameter acquiring module 1002, the determining module 1004, the estimated coding quantization parameter calculation module 1006, the target coding quantization parameter determining module 1008, and the coding module 1010 shown in FIG. 10. A computer-readable instruction formed by the program modules causes the processor to perform the steps in the video transcoding method in the embodiments of the present disclosure. For example, in the computer device shown in FIG. 14, the initial quantization parameter acquiring module 1002 of the video transcoding apparatus shown in FIG. 10 may be used to obtain the initial quantization parameter used to encode the initial coding unit for generating the initial compressed video. The determining module 1004 is used to obtain the current coding unit in the current video frame, and determine, according to the initial quantization parameter used to encode the initial coding unit, the current reference quantization parameter corresponding to the current coding unit. The estimated coding quantization parameter calculation module 1006 is used to calculate the estimated coding quantization parameter corresponding to the current coding unit. The target coding quantization parameter determining module 1008 is used to calculate the difference between the current reference quantization parameter corresponding to the current coding unit and the estimated coding quantization parameter corresponding to the current coding unit, and increase, according to the difference, the estimated coding quantization parameter corresponding to the current coding unit, to obtain the target coding quantization parameter. The coding module 1010 is used to code the current coding unit according to the target coding quantization parameter.

A computer device, including a memory and one or more processors, where the memory stores a computer-readable instruction, and when the computer-readable instruction is executed by the one or more processors, the one or more processors are caused to perform the following steps: obtaining an initial quantization parameter used to encode an initial coding unit for generating an initial compressed video; determining, according to the initial quantization parameter used to encode the initial coding unit, a current reference quantization parameter corresponding to a current coding unit in a current video frame; determining an estimated coding quantization parameter corresponding to the current coding unit; determining a difference between the estimated coding quantization parameter corresponding to the current coding unit and the current reference quantization parameter corresponding to the current coding unit, and increasing, according to the difference, the estimated coding quantization parameter corresponding to the current coding unit, to obtain a target coding quantization parameter; and coding the current coding unit according to the target coding quantization parameter.

In an embodiment, the step of obtaining the current coding unit in the current video frame, and determining, according to the initial quantization parameter used to encode the initial coding unit, a current reference quantization parameter corresponding to the current coding unit includes: obtaining a target initial decoded frame matching the current video frame; obtaining a target initial coding unit matching the current coding unit from the target initial decoded frame; and determining, according to an initial quantization parameter used to encode the target initial coding unit, the current reference quantization parameter corresponding to the current coding unit.

In an embodiment, the step of obtaining the current coding unit in the current video frame, and determining, according to the initial quantization parameter used to encode the initial coding unit, a current reference quantization parameter corresponding to the current coding unit includes: obtaining a target initial decoded frame matching the current video frame; obtaining initial quantization parameters used to encode initial coding units in the target initial decoded frame; and sorting the initial quantization parameters used to encode the initial coding units according to an ascending or descending order to obtain a sorting result, and determining, according to the sorting result, the current reference quantization parameter corresponding to the current coding unit.

In an embodiment, the step of determining, according to the sorting result, the current reference quantization parameter corresponding to the current coding unit includes: determining a smallest initial quantization parameter in the sorting result as the current reference quantization parameter corresponding to the current coding unit.

In an embodiment, the step of obtaining the current coding unit in the current video frame, and determining, according to the initial quantization parameter used to encode the initial coding unit, a current reference quantization parameter corresponding to the current coding unit includes: obtaining an initial video coding standard corresponding to the initial compressed video, and obtaining a current video coding standard corresponding to the current video frame; determining a mapping relationship between quantization parameters according to the initial video coding standard and the current video coding standard; and obtaining the current reference quantization parameter according to the initial quantization parameter used to encode the initial coding unit and the mapping relationship.

In an embodiment, the step of determining a difference between the current reference quantization parameter corresponding to the current coding unit and the estimated coding quantization parameter corresponding to the current coding unit, and increasing, according to the difference, the estimated coding quantization parameter corresponding to the current coding unit, to obtain a target coding quantization parameter includes: when the difference is greater than a preset threshold, obtaining an adjustment coefficient, and calculating a quantization parameter increment according to the adjustment coefficient and the difference; and calculating the target coding quantization parameter according to the quantization parameter increment and the estimated coding quantization parameter corresponding to the current coding unit.

In an embodiment, when the computer-readable instruction is executed by the processors, the processors are further caused to perform the following steps: obtaining a target initial decoded frame matching the current video frame; and determining, according to the initial quantization parameter used to encode the initial coding unit in the target initial decoded frame, an average reference quantization parameter corresponding to the current coding unit; and the step of obtaining an adjustment coefficient includes: calculating a target difference between the average reference quantization parameter and the current reference quantization parameter; and calculating the adjustment coefficient according to the target difference, where the adjustment coefficient is positively correlated with the target difference.

In an embodiment, the step of determining, according to the initial quantization parameter used to encode the initial coding unit in the target initial decoded frame, an average reference quantization parameter corresponding to the current coding unit includes: obtaining initial quantization parameters used to encode initial coding units in the target initial decoded frame, and calculating an average value of the initial quantization parameters used to encode the initial coding units, to obtain an average quantization parameter; and determining the average quantization parameter as the average reference quantization parameter corresponding to the current coding unit in the current video frame.

In an embodiment, when the computer-readable instruction is executed by the processors, the processors are further caused to perform the following steps: obtaining initial decoded frames obtained by decoding the initial compressed video, calculating frame average quantization parameters corresponding to the initial decoded frames, and calculating, according to the frame average quantization parameters, a video average quantization parameter corresponding to the initial compressed video; when a difference between the video average quantization parameter and a frame average quantization parameter of an initial decoded frame is greater than a preset parameter, determining a current video frame matching the initial decoded frame as a first type of video frame; and when the difference between the video average quantization parameter and the frame average quantization parameter is less than or equal to the preset parameter, determining a current video frame matching the initial decoded frame as a second type of video frame. The step of obtaining an adjustment coefficient, and calculating a quantization parameter increment according to the adjustment coefficient and the difference includes: when the current video frame including the current coding unit is the first type of video frame, obtaining a first adjustment coefficient, and calculating the quantization parameter increment according to the first adjustment coefficient and the difference; and when the current video frame including the current coding unit is the second type of video frame, obtaining a second adjustment coefficient, and calculating the quantization parameter increment according to the second adjustment coefficient and the difference.

In an embodiment, one or more computer-readable non-volatile storage mediums storing a computer-readable instruction is provided, where when the computer-readable instruction is executed by one or more processors, the one or more processors are caused to perform the following steps: obtaining an initial quantization parameter used to encode an initial coding unit for generating an initial compressed video; determining, according to the initial quantization parameter used to encode the initial coding unit, a current reference quantization parameter corresponding to a current coding unit in a current video frame; determining an estimated coding quantization parameter corresponding to the current coding unit; determining a difference between the estimated coding quantization parameter corresponding to the current coding unit and the current reference quantization parameter corresponding to the current coding unit, and increasing, according to the difference, the estimated coding quantization parameter corresponding to the current coding unit, to obtain a target coding quantization parameter; and coding the current coding unit according to the target coding quantization parameter.

In an embodiment, the step of obtaining the current coding unit in the current video frame, and determining, according to the initial quantization parameter used to encode the initial coding unit, a current reference quantization parameter corresponding to the current coding unit includes: obtaining a target initial decoded frame matching the current video frame; obtaining a target initial coding unit matching the current coding unit from the target initial decoded frame; and determining, according to an initial quantization parameter used to encode the target initial coding unit, the current reference quantization parameter corresponding to the current coding unit.

In an embodiment, the step of obtaining the current coding unit in the current video frame, and determining, according to the initial quantization parameter used to encode the initial coding unit, a current reference quantization parameter corresponding to the current coding unit includes: obtaining a target initial decoded frame matching the current video frame; obtaining initial quantization parameters used to encode initial coding units in the target initial decoded frame; and sorting the initial quantization parameters used to encode the initial coding units according to an ascending or descending order to obtain a sorting result, and determining, according to the sorting result, the current reference quantization parameter corresponding to the current coding unit.

In an embodiment, the step of determining, according to the sorting result, the current reference quantization parameter corresponding to the current coding unit includes: determining a smallest initial quantization parameter in the sorting result as the current reference quantization parameter corresponding to the current coding unit.

In an embodiment, the step of obtaining the current coding unit in the current video frame, and determining, according to the initial quantization parameter used to encode the initial coding unit, a current reference quantization parameter corresponding to the current coding unit includes: obtaining an initial video coding standard corresponding to the initial compressed video, and obtaining a current video coding standard corresponding to the current video frame; determining a mapping relationship between quantization parameters according to the initial video coding standard and the current video coding standard; and obtaining the current reference quantization parameter according to the initial quantization parameter used to encode the initial coding unit and the mapping relationship.

In an embodiment, the step of determining a difference between the current reference quantization parameter corresponding to the current coding unit and the estimated coding quantization parameter corresponding to the current coding unit, and increasing, according to the difference, the estimated coding quantization parameter corresponding to the current coding unit, to obtain a target coding quantization parameter includes: when the difference is greater than a preset threshold, obtaining an adjustment coefficient, and calculating a quantization parameter increment according to the adjustment coefficient and the difference; and calculating the target coding quantization parameter according to the quantization parameter increment and the estimated coding quantization parameter corresponding to the current coding unit.

In an embodiment, when the computer-readable instruction is executed by the processors, the processors are further caused to perform the following steps: obtaining a target initial decoded frame matching the current video frame; determining, according to the initial quantization parameter used to encode the initial coding unit in the target initial decoded frame, an average reference quantization parameter corresponding to the current coding unit; and the step of obtaining an adjustment coefficient includes: calculating a target difference between the average reference quantization parameter and the current reference quantization parameter; and calculating the adjustment coefficient according to the target difference, where the adjustment coefficient is positively correlated with the target difference.

In an embodiment, the step of determining, according to the initial quantization parameter used to encode the initial coding unit in the target initial decoded frame, an average reference quantization parameter corresponding to the current coding unit includes: obtaining initial quantization parameters used to encode initial coding units in the target initial decoded frame, and calculating an average value of the initial quantization parameters used to encode the initial coding units, to obtain an average quantization parameter; and determining the average quantization parameter as the average reference quantization parameter corresponding to the current coding unit in the current video frame.

In an embodiment, when the computer-readable instruction is executed by the processors, the processors are further caused to perform the following steps: obtaining initial decoded frames obtained by decoding the initial compressed video, calculating frame average quantization parameters corresponding to the initial decoded frames, and calculating, according to the frame average quantization parameters, a video average quantization parameter corresponding to the initial compressed video; when a difference between the video average quantization parameter and a frame average quantization parameter of an initial decoded frame is greater than a preset parameter, determining a current video frame matching the initial decoded frame as a first type of video frame; and when the difference between the video average quantization parameter and the frame average quantization parameter is less than or equal to the preset parameter, determining a current video frame matching the initial decoded frame as a second type of video frame. The step of obtaining an adjustment coefficient, and calculating a quantization parameter increment according to the adjustment coefficient and the difference includes: when the current video frame including the current coding unit is the first type of video frame, obtaining a first adjustment coefficient, and calculating the quantization parameter increment according to the first adjustment coefficient and the difference; and when the current video frame including the current coding unit is the second type of video frame, obtaining a second adjustment coefficient, and calculating the quantization parameter increment according to the second adjustment coefficient and the difference.

A person of ordinary skill in the art may understand that some or all procedures in the method in the foregoing embodiments may be implemented by a computer-readable instruction instructing related hardware, the program may be stored in a non-volatile computer readable storage medium, and when the program is executed, the procedures in the foregoing method embodiments may be implemented. Any memory, storage, database, or other mediums mentioned in the embodiments provided in the present disclosure may include a non-volatile and/or volatile memory. The non-volatile memory may include a read-only memory (ROM), a programmable ROM (PROM), an electrically programmable ROM(EPROM), an electrically erasable programmable ROM(EEPROM), or a flash. The volatile memory may include a random access memory (RAM) or an external cache memory. For the purpose of description instead of limitation, the RAM is available in multiple forms, such as a static RAM (SRAM), a dynamic RAM (DRAM), a synchronous DRAM (SDRAM), a double data rate SDRAM (DDRSDRAM), an enhanced SDRAM (ESDRAM), a synchronous link (Synchlink) DRAM (SLDRAM), a Rambus (Rambus) direct RAM (RDRAM), a direct Rambus dynamic RAM (DRDRAM), and a Rambus dynamic RAM (RDRAM), and the like.

The technical features in the foregoing embodiments may be randomly combined. For concise description, not all possible combinations of the technical features in the embodiment are described.

## Claims

1. A video transcoding method, comprising:

   obtaining (S202), by a computer device, an initial quantization parameter for each initial coding unit of an initial decoded frame, the initial quantization parameter being used to encode the initial coding unit for generating an initial compressed video, wherein the initial quantization parameter is obtained by decoding the initial compressed video to obtain the initial decoded frame, and wherein the initial coding unit is a coding unit included in the initial compressed video, and the initial quantization parameter is a quantization parameter corresponding to the initial coding unit;
   determining (S204), by the computer device according to the initial quantization parameter used to encode the initial coding unit, a current reference quantization parameter corresponding to a current coding unit in a current video frame, wherein the current video frame is generated by decoding the initial compressed video, and wherein the current video frame is a current to-be-coded video frame, and the current coding unit is a coding unit in the current video frame;
   determining (S206), by the computer device, an estimated coding quantization parameter corresponding to the current coding unit;
   determining (S208), by the computer device, a difference between the current reference quantization parameter and the estimated coding quantization parameter;
   determining (S208A) whether the difference is greater than a threshold;
   in response to the difference being not greater than a threshold,
   setting (S208D) a target quantization parameter to be the estimated quantization parameter;
   in response to the difference being greater than the threshold,

       obtaining (S208B) an adjustment coefficient used to control an adjustment degree, and calculating a quantization parameter increment according to product of the adjustment coefficient and the difference, and

setting (S208C) the target quantization parameter to be a summation of the estimated quantization parameter and the quantization parameter increment; and coding (S210), by the computer device, the current coding unit according to the target coding quantization parameter, wherein the method further comprises:

obtaining, by the computer device, a target initial decoded frame among initial decoded frames, the target initial decoded frame having a one-to-one correspondence to the current video frame; and
determining, by the computer device according to the initial quantization parameters used to encode the initial coding units in the target initial decoded frame, an average reference quantization parameter and
obtaining the adjustment coefficient comprises:

calculating, by the computer device, a target difference between the average reference quantization parameter and the current reference quantization parameter; and
calculating, by the computer device, the adjustment coefficient according to the target difference, wherein the adjustment coefficient is negatively correlated with the target difference, such that when the target difference is large, the calculated adjustment coefficient is small, and when the target difference is small, the calculated adjustment coefficient is large..

2. The method according to claim 1, wherein the determining, by the computer device according to the initial quantization parameter used to encode the initial coding unit, a current reference quantization parameter corresponding to a current coding unit in a current video frame comprises:

obtaining, by the computer device, a target initial decoded frame matching the current video frame according to a pre-defined matching relationship between the current video frame and the target initial decoded frame, which have a one-to-one correspondence;
obtaining, by the computer device from the target initial decoded frame, a target initial coding unit matching the current coding unit in accordance with a pre-defined matching relationship between the current coding unit and the initial coding unit; and
determining, by the computer device according to an initial quantization parameter used to encode the target initial coding unit, the current reference quantization parameter corresponding to the current coding unit.

3. The method according to claim 1, wherein the determining, by the computer device according to the initial quantization parameter used to encode the initial coding unit, a current reference quantization parameter corresponding to a current coding unit in a current video frame comprises:

obtaining, by the computer device, a target initial decoded frame matching the current video frame according to a pre-defined matching relationship between the current video frame and the target initial decoded frame, which have a one-to-one correspondence;
obtaining, by the computer device, initial quantization parameters used to encode initial coding units in the target initial decoded frame; and
sorting, by the computer device, the initial quantization parameters used to encode the initial coding units according to an ascending or descending order to obtain a sorting result, and determining, according to the sorting result, the current reference quantization parameter corresponding to the current coding unit.

4. The method according to claim 3, wherein the determining, according to the sorting result, the current reference quantization parameter corresponding to the current coding unit comprises:
determining, by the computer device, a smallest initial quantization parameter in the sorting result as the current reference quantization parameter corresponding to the current coding unit.

5. The method according to claim 1, wherein the determining, by the computer device according to the initial quantization parameter used to encode the initial coding unit, a current reference quantization parameter corresponding to a current coding unit in a current video frame comprises:

obtaining, by the computer device, an initial video coding standard corresponding to the initial compressed video, and obtaining a current video coding standard corresponding to the current video frame;
determining, by the computer device, a mapping relationship between quantization parameters according to the initial video coding standard and the current video coding standard; and

obtaining, by the computer device, the current reference quantization parameter according to the initial quantization parameter used to encode the initial coding unit and the mapping relationship.

6. The method according to claim 1, wherein the determining, by the computer device according to the initial quantization parameter used to encode the initial coding unit in the target initial decoded frame, an average reference quantization parameter corresponding to the current coding unit comprises:

obtaining, by the computer device, initial quantization parameters used to encode initial coding units in the target initial decoded frame, and calculating an average value of the initial quantization parameters used to encode the initial coding units, to obtain an average quantization parameter; and
determining, by the computer device, the average quantization parameter as the average reference quantization parameter corresponding to the current coding unit in the current video frame.

7. The method according to claim 1, wherein the method further comprises:

obtaining, by the computer device, initial decoded frames obtained by decoding the initial compressed video, calculating frame average quantization parameters corresponding to the initial decoded frames, and calculating, according to the frame average quantization parameters, a video average quantization parameter corresponding to the initial compressed video;
determining, by the computer device when a difference between the video average quantization parameter and a frame average quantization parameter of an initial decoded frame is greater than a preset parameter, a current video frame matching the initial decoded frame as a first type of video frame; and
determining, by the computer device when the difference between the video average quantization parameter and the frame average quantization parameter is less than or equal to the preset parameter, a current video frame matching the initial decoded frame as a second type of video frame; and
the obtaining, by the computer device, an adjustment coefficient, and calculating a quantization parameter increment according to the adjustment coefficient and the difference comprises:

when the current video frame including the current coding unit is the first type of video frame, obtaining, by the computer device, a first adjustment coefficient, and calculating the quantization parameter increment according to the first adjustment coefficient and the difference; and
when the current video frame including the current coding unit is the second type of video frame, obtaining, by the computer device, a second adjustment coefficient, and calculating the quantization parameter increment according to the second adjustment coefficient and the difference, the first adjustment coefficient is different from the second adjustment coefficient.

8. A computer device, comprising a memory and one or more processors, the memory storing a computer-readable instruction, and when the computer-readable instruction being executed by the one or more processors, the one or more processors being caused to perform the video transcoding method according to any one of claims 1 to 7.

9. One or more computer-readable non-volatile storage mediums storing a computer-readable instruction, when the computer-readable instruction being executed by one or more processors, the one or more processors being caused to perform the video transcoding method according to any one of claims 1 to 7.

**Patentansprüche**

1. Videotranscodierverfahren, das Folgendes umfasst:

Erhalten (S202) eines anfänglichen Quantisierungsparameters für jede anfängliche Codiereinheit eines anfänglichen decodierten Frames durch eine Computervorrichtung, wobei der anfängliche Quantisierungsparameter zum Codieren der anfänglichen Codiereinheit zum Erzeugen eines anfänglich komprimierten Videos verwendet wird, wobei der anfängliche Quantisierungsparameter durch Decodieren des anfänglich komprimierten Videos erhalten wird, um den anfänglich decodierten Frame zu erhalten, und wobei die anfängliche Codiereinheit eine Codiereinheit ist, die im anfänglich komprimierten Video beinhaltet ist, und der anfängliche Quantisierungsparameter ein Quantisierungsparameter ist, der der anfänglichen Codiereinheit entspricht;
Bestimmen (S204) eines aktuellen Referenzquantisierungsparameters, der einer aktuellen Codiereinheit in einem aktuellen Videoframe entspricht, durch die Computervorrichtung gemäß dem anfänglichen Quantisierungsparameter, der zum Codieren der anfänglichen Codiereinheit verwendet wird, wobei der aktuellen Videoframe durch Decodieren des anfänglich komprimierten Videos erzeugt wird, und wobei der aktuelle Videoframe ein aktueller Videoframe ist, der zu codieren ist, und die aktuelle Codiereinheit eine Codiereinheit im aktuellen Videoframe ist;

Bestimmen (S206) eines geschätzten Codierquantisierungsparameters, der der aktuellen Codiereinheit entspricht, durch die Computervorrichtung;

Bestimmen (S208) einer Differenz zwischen dem aktuellen Referenzquantisierungsparameter und dem geschätzten Codierquantisierungsparameter durch die Computervorrichtung;

Bestimmen (S208A), ob die Differenz größer ist als ein Schwellwert;

in Reaktion darauf, dass die Differenz nicht größer ist als ein Schwellwert,

Einstellen (S208D) eines Zielquantisierungsparameters als den geschätzten Quantisierungsparameter;

in Reaktion darauf, dass die Differenz größer ist als der Schwellwert,

Erhalten (S208B) eines Anpassungskoeffizienten, der zum Steuern eines Anpassungsmaßes verwendet wird, und Berechnen einer Quantisierungsparametererhöhung gemäß einem Produkt des Anpassungskoeffizienten und der Differenz, und

Einstellen (S208C) des Zielquantisierungsparameters auf eine Summierung des geschätzten Quantisierungsparameters und der Quantisierungsparametererhöhung; und

Codieren (S210) der aktuellen Codiereinheit durch die Computervorrichtung gemäß dem Zielcodierquantisierungsparameter, wobei das Verfahren ferner Folgendes umfasst:

Erhalten eines anfänglichen decodierten Zielframes aus anfänglichen decodierten Frames durch die Computervorrichtung, wobei der anfängliche decodierte Zielframe eine Eins-zu-eins-Entsprechung zum aktuellen Videoframe aufweist; und

Bestimmen eines durchschnittlichen Referenzquantisierungsparameters durch die Computervorrichtung gemäß den anfänglichen Quantisierungsparametern, die zum Codieren der anfänglichen Codiereinheiten im anfänglichen decodierten Zielframe verwendet werden, und

das Erhalten des Anpassungskoeffizienten umfasst Folgendes:

Berechnen einer Zieldifferenz zwischen dem durchschnittlichen Referenzquantisierungsparameter und dem aktuellen Referenzquantisierungsparameter durch die Computervorrichtung; und

Berechnen des Anpassungskoeffizienten durch die Computervorrichtung gemäß der Zieldifferenz, wobei der Anpassungskoeffizient mit der Zieldifferenz negativ korreliert, derart, dass, wenn die Zieldifferenz groß ist, der berechnete Anpassungskoeffizient klein ist, und wenn die Zieldifferenz klein ist, der berechnete Anpassungskoeffizient groß ist.

2. Verfahren nach Anspruch 1, wobei das Bestimmen eines aktuellen Referenzquantisierungsparameters, der einer aktuellen Codiereinheit in einem aktuellen Videoframe entspricht, durch die Computervorrichtung gemäß dem anfänglichen Quantisierungsparameter, der verwendet wird, um die anfängliche Codiereinheit zu codieren, Folgendes umfasst:

Erhalten eines anfänglichen decodierten Zielframes, der gemäß einer vordefinierten Abgleichbeziehung zwischen dem aktuellen Videoframe und dem anfänglichen decodierten Zielframe, die eine Eins-zu-eins-Entsprechung aufweisen, mit dem aktuellen Videoframe übereinstimmt, durch die Computervorrichtung;

Erhalten einer anfänglichen Zielcodiereinheit, die gemäß einer vordefinierten Abgleichbeziehung zwischen der aktuellen Codiereinheit und der anfänglichen Codiereinheit mit der aktuellen Codiereinheit übereinstimmt, durch die Computervorrichtung aus dem anfänglichen decodierten Zielframe; und

Bestimmen des aktuellen Referenzquantisierungsparameters, der der aktuellen Codiereinheit entspricht, durch die Computervorrichtung gemäß einem anfänglichen Quantisierungsparameter, der zum Codieren der anfänglichen Zielcodiereinheit verwendet wird.

3. Verfahren nach Anspruch 1, wobei das Bestimmen eines aktuellen Referenzquantisierungsparameters, der einer aktuellen Codiereinheit in einem aktuellen Videoframe entspricht, durch die Computervorrichtung gemäß dem anfänglichen Quantisierungsparameter, der verwendet wird, um die anfängliche Codiereinheit zu codieren, Folgendes umfasst:

Erhalten eines anfänglichen decodierten Zielframes, der gemäß einer vordefinierten Abgleichbeziehung zwischen dem aktuellen Videoframe und dem anfänglichen decodierten Zielframe, die eine Eins-zu-eins-Entsprechung aufweisen, mit dem aktuellen Videoframe übereinstimmt, durch die Computervorrichtung;

Erhalten von anfänglichen Quantisierungsparametern, die zum Codieren von anfänglichen Codiereinheiten im anfänglichen decodierten Zielframe verwendet werden, durch die Computervorrichtung; und

Sortieren der anfänglichen Quantisierungsparameter, die zum Codieren der anfänglichen Codiereinheiten verwendet werden, durch die Computervorrichtung gemäß einer aufsteigenden oder absteigenden Reihenfolge, um ein Sortierergebnis zu erhalten, und Bestimmen des aktuellen Referenzquantisierungsparameters, der der aktuellen Codiereinheit entspricht, gemäß dem Sortierergebnis.

4. Verfahren nach Anspruch 3, wobei das Bestimmen des aktuellen Referenzquantisierungsparameters, der der aktuellen Codiereinheit entspricht, gemäß dem Sortierergebnis Folgendes umfasst:

Bestimmen eines kleinsten anfänglichen Quantisierungsparameters im Sortierergebnis als den aktuellen Referenzquantisierungsparameter, der der aktuellen Codiereinheit entspricht, durch die Computervorrichtung.

5. Verfahren nach Anspruch 1, wobei das Bestimmen eines aktuellen Referenzquantisierungsparameters, der einer aktuellen Codiereinheit in einem aktuellen Videoframe entspricht, durch die Computervorrichtung gemäß dem anfänglichen Quantisierungsparameter, der verwendet wird, um die anfängliche Codiereinheit zu codieren, Folgendes umfasst:

Erhalten eines anfänglichen Videocodierstandards, der dem anfänglichen komprimierten Video entspricht, und Erhalten eines aktuellen Videocodierstandards, der dem aktuellen Videoframe entspricht, durch die Computervorrichtung;

Bestimmen einer Zuordnungsbeziehung zwischen Quantisierungsparametern durch die Computervorrichtung gemäß dem anfänglichen Videocodierstandard und dem aktuellen Videocodierstandard; und

Erhalten des aktuellen Referenzquantisierungsparameters durch die Computervorrichtung gemäß dem anfänglichen Quantisierungsparameter, der zum Codieren der anfänglichen Codiereinheit verwendet wird, und der Zuordnungsbeziehung.

6. Verfahren nach Anspruch 1, wobei das Bestimmen eines durchschnittlichen Referenzquantisierungsparameters, der der aktuellen Codiereinheit entspricht, durch die Computervorrichtung gemäß dem anfänglichen Quantisierungsparameter, der zum Codieren der anfänglichen Codiereinheit im anfänglichen decodierten Zielframe verwendet wird, Folgendes umfasst:

Erhalten von anfänglichen Quantisierungsparametern, die zum Codieren von anfänglichen Codiereinheiten im anfänglichen decodierten Zielframe verwendet werden, und Berechnen eines Durchschnittswertes der anfänglichen Quantisierungsparameter, die zum Codieren der anfänglichen Codiereinheiten verwendet werden, durch die Computervorrichtung, um einen durchschnittlichen Quantisierungsparameter zu erhalten; und

Bestimmen des durchschnittlichen Quantisierungsparameters als den durchschnittlichen Referenzquantisierungsparameter, der der aktuellen Codiereinheit im aktuellen Videoframe entspricht, durch die Computervorrichtung.

7. Verfahren nach Anspruch 1, wobei das Verfahren ferner Folgendes umfasst:

Erhalten von anfänglichen decodierten Frames, die durch Decodieren des anfänglichen komprimierten Videos erhalten werden, Berechnen von durchschnittlichen Framequantisierungsparametern, die den anfänglichen decodierten Frames entsprechen, und Berechnen eines durchschnittlichen Videoquantisierungsparameters, der dem anfänglichen komprimierten Video entspricht, durch die Computervorrichtung;

Bestimmen eines aktuellen Videoframes, der mit dem anfänglichen decodierten Frame übereinstimmt, als eine erste Art eines Videoframes durch die Computervorrichtung, wenn eine Differenz zwischen dem durchschnittlichen Videoquantisierungsparameter und einem durchschnittlichen Framequantisierungsparameter eines anfänglichen decodierten Frames größer ist als ein voreingestellter Parameter; und

Bestimmen eines aktuellen Videoframes, der mit dem anfänglichen decodierten Frame übereinstimmt, als eine zweite Art eines Videoframes durch die Computervorrichtung, wenn die Differenz zwischen dem durchschnittlichen Videoquantisierungsparameter und dem durchschnittlichen Framequantisierungsparameter kleiner als oder gleich dem voreingestellten Parameters ist; und

das Erhalten eines Anpassungskoeffizienten und das Berechnen einer Quantisierungsparametererhöhung durch die Computervorrichtung gemäß dem Anpassungskoeffizienten und der Differenz umfasst Folgendes:

wenn der aktuelle Videoframe, der die aktuelle Codiereinheit beinhaltet, die erste Art eines Videoframes ist, Erhalten eines ersten Anpassungskoeffizienten und Berechnen der Quantisierungsparametererhöhung durch die Computervorrichtung gemäß dem ersten Anpassungskoeffizienten und der Differenz; und

wenn der aktuelle Videoframe, der die aktuelle Codiereinheit beinhaltet, die zweite Art eines Videoframes ist, Erhalten eines zweiten Anpassungskoeffizienten und Berechnen der Quantisierungsparametererhöhung durch die Computervorrichtung gemäß dem zweiten Anpassungskoeffizienten und der Differenz, der erste Anpassungskoeffizient unterscheidet sich vom zweiten Anpassungskoeffizient.

8. Computervorrichtung, die einen Speicher und einen oder mehrere Prozessoren umfasst, wobei der Speicher eine computerlesbare Anweisung speichert, und wenn die computerlesbare Anweisung von dem einen oder den mehreren Prozessoren ausgeführt wird, der eine oder die mehreren Prozessoren veranlasst werden, das Videotranscodierverfahren nach einem der Ansprüche 1 bis 7 durchzuführen.

9. Ein oder mehrere computerlesbare nichtflüchtige Speichermedien, auf denen eine computerlesbare Anweisung gespeichert ist, wobei, wenn die computerlesbare Anweisung von einem oder mehreren Prozessoren ausgeführt werden, der eine oder die mehreren Prozessoren veranlasst werden, das Videotranscodierverfahren nach einem der Ansprüche 1 bis 7 durchzuführen.

**Revendications**

1. Procédé de transcodage vidéo, comprenant les étapes suivantes :

obtenir (S202), par un dispositif informatique, d'un paramètre de quantification initial pour chaque unité de codage initiale d'une trame décodée initiale, le paramètre de quantification initial étant utilisé pour coder l'unité de codage initiale pour générer une vidéo compressée initiale, dans lequel le paramètre de quantification initial est obtenu en décodant la vidéo compressée initiale pour obtenir la trame décodée initiale, et dans lequel l'unité de codage initiale est une unité de codage incluse dans la vidéo compressée initiale, et le paramètre de quantification initial est un paramètre de quantification correspondant à l'unité de codage initiale ;

déterminer (S204), par le dispositif informatique, selon le paramètre de quantification initial utilisé pour coder l'unité de codage initiale, un paramètre de quantification de référence actuel correspondant à une unité de codage actuelle dans une trame vidéo actuelle, dans lequel la trame vidéo actuelle est générée en décodant la vidéo compressée initiale, et dans lequel la trame vidéo actuelle est une trame vidéo actuelle à coder, et l'unité de codage actuelle est une unité de codage dans la trame vidéo actuelle ;

déterminer (S206), par le dispositif informatique, un paramètre de quantification de codage estimé correspondant à l'unité de codage actuelle ;

déterminer (S208), par le dispositif informatique, une différence entre le paramètre de quantification de référence actuel et le paramètre de quantification de codage estimé ;

déterminer (S208A) si la différence est supérieure à un seuil ;

en réponse au fait que la différence n'est pas supérieure à un seuil,

fixer (S208D) un paramètre de quantification cible au paramètre de quantification estimé ;

en réponse au fait que la différence est supérieure au seuil,

obtenir (S208B) un coefficient d'ajustement utilisé pour contrôler un degré d'ajustement, et calculer un incrément de paramètre de quantification selon le produit du coefficient d'ajustement et de la différence, et

fixer (S208C) le paramètre de quantification cible à la somme du paramètre de quantification estimé et de l'incrément de paramètre de quantification ; et

coder (S210), par le dispositif informatique, l'unité de codage actuelle selon le paramètre de quantification de codage cible, dans lequel le procédé comprend en outre les étapes suivantes :

obtenir, par le dispositif informatique, une trame décodée initiale cible parmi les trames décodées initiales, la trame décodée initiale cible ayant une correspondance biunivoque avec la trame vidéo actuelle ; et

déterminer, par le dispositif informatique, selon les paramètres de quantification initiaux utilisés pour coder les unités de codage initiales dans la trame décodée initiale cible, un paramètre de quantification de référence moyen et

l'obtention du coefficient d'ajustement comprend ce qui suit :

calculer, par le dispositif informatique, une différence cible entre le paramètre de quantification de référence moyen et le paramètre de quantification de référence actuel ; et

calculer, par le dispositif informatique, le coefficient d'ajustement selon la différence cible, dans lequel le coefficient d'ajustement est corrélé négativement avec la différence cible, de sorte que lorsque la différence cible est grande, le coefficient d'ajustement calculé est petit, et que lorsque la différence cible est petite, le coefficient d'ajustement calculé est grand.

2. Procédé selon la revendication 1, dans lequel la détermination, par le dispositif informatique, selon le paramètre de quantification initial utilisé pour coder l'unité de codage initiale, d'un paramètre de quantification de référence actuel correspondant à une unité de codage actuelle dans une trame vidéo actuelle comprend ce qui suit :

obtenir, par le dispositif informatique, une trame décodée initiale cible concordant avec la trame vidéo actuelle selon une relation de concordance prédéfinie entre la trame vidéo actuelle et la trame décodée initiale cible qui ont une correspondance biunivoque ;

obtenir, par le dispositif informatique, à partir de la trame décodée initiale cible, une unité de codage initiale cible concordant avec l'unité de codage actuelle conformément à une relation de concordance prédéfinie entre l'unité de codage actuelle et l'unité de codage initiale ; et déterminer, par le dispositif informatique selon un paramètre de quantification initial utilisé pour coder l'unité de codage initiale cible, le paramètre de quantification de référence actuel correspondant à l'unité de codage actuelle.

3. Procédé selon la revendication 1, dans lequel la détermination, par le dispositif informatique, selon le paramètre de quantification initial utilisé pour coder l'unité de codage initiale, d'un paramètre de quantification de référence actuel correspondant à une unité de codage actuelle dans une trame vidéo actuelle comprend ce qui suit :

obtenir, par le dispositif informatique, une trame décodée initiale cible concordant avec la trame vidéo actuelle selon une relation de concordance prédéfinie entre la trame vidéo actuelle et la trame décodée initiale cible qui ont une correspondance biunivoque ;

obtenir, par le dispositif informatique, des paramètres de quantification initiaux utilisés pour coder des unités de codage initiales dans la trame décodée initiale cible ; et

trier, par le dispositif informatique, les paramètres de quantification initiaux utilisés pour coder les unités de codage initiales selon un ordre croissant ou décroissant pour obtenir un résultat de tri, et déterminer, selon le résultat de tri, le paramètre de quantification de référence actuel correspondant à l'unité de codage actuelle.

4. Procédé selon la revendication 3, dans lequel la détermination, selon le résultat de tri, du paramètre de quantification de référence actuel correspondant à l'unité de codage actuelle comprend ce qui suit : déterminer, par le dispositif informatique, le plus petit paramètre de quantification initial du résultat de tri comme étant le paramètre de quantification de référence actuel correspondant à l'unité de codage actuelle.

5. Procédé selon la revendication 1, dans lequel la détermination, par le dispositif informatique, selon le paramètre de quantification initial utilisé pour coder l'unité de codage initiale, d'un paramètre de quantification de référence actuel correspondant à une unité de codage actuelle dans une trame vidéo actuelle comprend ce qui suit :

obtenir, par le dispositif informatique, une norme de codage vidéo initiale correspondant à la vidéo compressée initiale, et obtenir une norme de codage vidéo actuelle correspondant à la trame vidéo actuelle ;

déterminer, par le dispositif informatique, une relation de mappage entre les paramètres de quantification selon la norme de codage vidéo initiale et la norme de codage vidéo actuelle ; et obtenir, par le dispositif informatique, le paramètre de quantification de référence actuel selon le paramètre de quantification initial utilisé pour coder l'unité de codage initiale et la relation de mappage.

6. Procédé selon la revendication 1, dans lequel la détermination, par le dispositif informatique, selon le paramètre de quantification initial utilisé pour coder l'unité de codage initiale dans la trame décodée initiale cible, d'un paramètre de quantification de référence moyen correspondant à l'unité de codage actuelle comprend ce qui suit :

obtenir, par le dispositif informatique, paramètres de quantification initiaux utilisés pour coder des unités de codage initiales dans la trame décodée initiale cible, et calculer une valeur moyenne des paramètres de quantification initiaux utilisés pour coder les unités de codage initiales pour obtenir un paramètre de quantification moyen ; et déterminer, par le dispositif informatique, le paramètre de quantification moyen comme étant le paramètre de quantification de référence moyen correspondant à l'unité de codage actuelle dans la trame vidéo actuelle.

7. Procédé selon la revendication 1, dans lequel le procédé comprend en outre les étapes suivantes :

> obtenir, par le dispositif informatique, des trames décodées initiales obtenues en décodant la vidéo compressée initiale, calculer des paramètres de quantification de trames moyens correspondant aux trames décodées initiales, et calculer, selon les paramètres de quantification moyens de trame, un paramètre de quantification de vidéo moyen correspondant à la vidéo compressée initiale ;
>
> déterminer, par le dispositif informatique, lorsqu'une différence entre le paramètre de quantification de vidéo moyen et un paramètre de quantification de trame moyen d'une trame décodée initiale est supérieure à un paramètre prédéfini, une trame vidéo actuelle concordant avec la trame décodée initiale comme étant un premier type de trame vidéo ; et
>
> déterminer, par le dispositif informatique, lorsque la différence entre le paramètre de quantification de vidéo moyen et le paramètre de quantification de trame moyen est inférieure ou égale au paramètre prédéfini, une trame vidéo actuelle concordant avec la trame décodée initiale comme étant un deuxième type de trame vidéo ; et
>
> l'obtention, par le dispositif informatique, d'un coefficient d'ajustement et le calcul d'un incrément de paramètre de quantification selon le coefficient d'ajustement et la différence comprennent ce qui suit :
>
>> lorsque la trame vidéo actuelle comportant l'unité de codage actuelle est le premier type de trame vidéo, obtenir, par le dispositif informatique, un premier coefficient d'ajustement, et calculer l'incrément de paramètre de quantification selon le premier coefficient d'ajustement et la différence ; et
>>
>> lorsque la trame vidéo actuelle comportant l'unité de codage actuelle est le deuxième type de trame vidéo, obtenir, par le dispositif informatique, un deuxième coefficient d'ajustement, et calculer l'incrément de paramètre de quantification selon le deuxième coefficient d'ajustement et la différence, le premier coefficient d'ajustement étant différent du deuxième coefficient d'ajustement.

8. Dispositif informatique, comprenant une mémoire et un ou plusieurs processeurs, la mémoire stockant une instruction lisible par ordinateur, et lorsque l'instruction lisible par ordinateur est exécutée par les un ou plusieurs processeurs, les un ou plusieurs processeurs sont amenés à réaliser le procédé de transcodage vidéo selon l'une des revendications 1 à 7.

9. Un ou plusieurs supports de stockage non volatiles lisibles par ordinateur stockant une instruction lisible par ordinateur, les un ou plusieurs processeurs étant amenés à, lorsque l'instruction lisible par ordinateur est exécutée par un ou plusieurs processeurs, réaliser le procédé de transcodage vidéo selon l'une des revendications 1 à 7.

FIG. 1

S202

Obtain an initial quantization parameter used to encode an initial coding unit for generating an initial compressed video

S204

Determine, according to the initial quantization parameter used to encode the initial coding unit, a current reference quantization parameter corresponding to a current coding unit in a current video frame

S206

Determine an estimated coding quantization parameter corresponding to the current coding unit

S208

Determine a difference between the current reference quantization parameter corresponding to the current coding unit and the estimated coding quantization parameter corresponding to the current coding unit, and increase, according to the difference, the estimated coding quantization parameter corresponding to the current coding unit, to obtain a target coding quantization parameter

S210

Code the current coding unit according to the target coding quantization parameter

FIG. 2

S204A

Obtain a target initial decoded frame matching the current video frame

S204B

Obtain a target initial coding unit matching the current coding unit from the target initial decoded frame

S204C

Determine, according to an initial quantization parameter used to encode the target initial coding unit, the current reference quantization parameter corresponding to the current coding unit

FIG. 3

S204a

Obtain a target initial decoded frame matching the current video frame

S204b

Obtain initial quantization parameters used to encode initial coding units in the target initial decoded frame

S204c

Sort, according to values, the initial quantization parameters used to encode the initial coding units, to obtain a sorting result, and determine, according to the sorting result, the current reference quantization parameter corresponding to the current coding unit

FIG. 4

S208A

Determine whether the difference is greater than a preset threshold

Yes

No

S208B

Obtain an adjustment coefficient and calculate a quantization parameter increment according to the adjustment coefficient and the difference

S208D

Directly determine the estimated coding quantization parameter as the target coding quantization parameter

S208C

Calculate the target coding quantization parameter according to the quantization parameter increment and the estimated coding quantization parameter corresponding to the current coding unit

FIG. 5

S212A

Obtain initial decoded frames obtained by decoding the initial compressed video, calculate frame average quantization parameters corresponding to the initial decoded frames, and calculate, according to the frame average quantization parameters, a video average quantization parameter corresponding to the initial compressed video

S212B

Determine whether a difference between a frame average quantization parameter and the video average quantization parameter is greater than a preset parameter

Yes

No

S212C

Determine the current video frame matching the initial decoded frame as a first type of video frame

S212D

Determine the current video frame matching the initial decoded frame as a second type of video frame

FIG. 6

Original video → Compression for the first time → Bitstream compressed for the first time → [Decoding by a server: Decode a bitstream compressed for the first time → Compression for the second time] → Bitstream compressed for the second time

FIG. 7

```
┌─────────────────────┐
│    Quantization     │
│     parameter       │
│    calculation      │
└─────────────────────┘
           │
           ▼
┌─────────────────────┐
│    Quantization     │
│ parameter adjustment│
└─────────────────────┘
           │
           ▼
```

| Prediction | → | Conversion | → | Quantization | → | Entropy coding |

FIG. 8

S901

Obtain an initial quantization parameter used to encode an initial coding unit for generating an initial compressed video

S902

Obtain a target initial decoded frame matching a current video frame, and obtain initial quantization parameters used to encode initial coding units in the target initial decoded frame

S903

Sort, according to an ascending or descending order, the initial quantization parameters used to encode the initial coding units, to obtain a sorting result, and determine a smallest initial quantization parameter in the sorting result as a current reference quantization parameter corresponding to a current coding unit

S904

Calculate an estimated coding quantization parameter corresponding to the current coding unit

S905

Calculate a difference between the current reference quantization parameter and the estimated coding quantization parameter corresponding to the current coding unit

S906

Yes — Determine whether the difference is greater than a preset threshold — No

S907

Obtain an adjustment coefficient, calculate a quantization parameter increment according to the adjustment coefficient and the difference, and calculate a target coding quantization parameter according to the quantization parameter increment and the estimated coding quantization parameter corresponding to the current coding unit

S908

Directly determine the coding quantization parameter as the target coding quantization parameter

S909

Code the current coding unit according to the target coding quantization parameter

FIG. 9

FIG. 10

FIG. 11

~ 1002

```
Initial quantization parameter
       acquiring module
```

~ 1004

```
      Determining module
```

~ 1006

```
 Estimated coding quantization
  parameter calculation module
```

~ 1012

```
 Average reference quantization
  parameter determining module
```

~ 1008

```
Target coding quantization parameter
        determining module
```

~ 1010

```
         Coding module
```

FIG. 12

1002

| Initial quantization parameter acquiring module |
|---|

1004

| Determining module |
|---|

1006

| Estimated coding quantization parameter calculation module |
|---|

1014

| Video average quantization parameter calculation module |
|---|

1016

| First-type video frame determining module |
|---|

1018

| Second-type video frame determining module |
|---|

1008

| Target coding quantization parameter determining module |
|---|

1010

| Coding module |
|---|

FIG. 13

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2017109370116

- US 6441754 B1

**Non-patent literature cited in the description**

- **J. YANG et al.** A rate control algorithm for MPEG-2 to H.264 realtime transcoding. *Visual Communications and Image Processing*, 2005

- **K.-D. SEO et al.** Dynamic Bit-Rate Reduction Based on the Requantization and Frame-Skipping for MPEG-1 to MPEG-4 Transcoder. *IEICE Trans. Fundamentals*, April 2004, vol. E87-A (4)